# EUROPEAN PATENT APPLICATION

(11) **EP 4 832 547 A1**
(43) Date of publication of application: **28.10.2026**
(21) Application number: 23962001.6
(22) Date of filing: 22.12.2023
(51) Int. Cl.: H04W 24/02

(54) **COMMUNICATION METHODS AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: SHEN, Jia, Dongguan, Guangdong 523860 (CN)
(74) Representative: RGTH
(86) International application number: PCT/CN2023/141212
(87) International publication number: WO 2025/129679

(57) **Abstract**

The present application relates to communication methods and communication devices. A method includes: receiving, by a first communication device, first downlink control information (DCI), where a format of the first DCI is used to determine whether to activate an artificial intelligence configuration. In the embodiments of the present application, determining whether to activate the artificial intelligence configuration through the format of the first DCI may reduce DCI overhead.

## Description

### TECHNICAL FIELD

The present application relates to the field of communication, and in particular, to communication methods and communication devices.

### BACKGROUND

For certain functionalities, features, or the like of the air interface for 5th-generation (5G) or 6th-generation (6G) communication, technical solutions based on artificial intelligence/machine learning (AI/ML) models may achieve certain performance gains compared to traditional non-AI/ML-based technical solutions.

### SUMMARY

Embodiments of the present application provide communication methods and communication devices, which may reduce signaling overhead.

Embodiments of the present application provide a communication method, which includes:
receiving, by a first communication device, first downlink control information (DCI), where a format of the first DCI is used to determine whether to activate an artificial intelligence configuration.

Embodiments of the present application provide a communication method, which includes:
transmitting, by a second communication device, first downlink control information (DCI), where a format of the first DCI is used to determine whether to activate an artificial intelligence configuration.

Embodiments of the present application provide a first communication device, which includes:
a receiving unit, configured to receive first downlink control information (DCI), where a format of the first DCI is used to determine whether to activate an artificial intelligence configuration.

Embodiments of the present application provide a second communication device, which includes:
a transmitting unit, configured to transmit first downlink control information (DCI), where a format of the first DCI is used to determine whether to activate an artificial intelligence configuration.

Embodiments of the present application provide a communication device, which includes: a transceiver, a processor, and a memory. The memory is configured to store a computer program, the transceiver is configured to communicate with other devices, and the processor is configured to call the computer program stored in the memory and run the computer program, to enable the communication device to perform the above-mentioned communication method.

Embodiments of the present application provide a chip for implementing the above-mentioned communication methods.

Specifically, the chip includes: a processor, configured to call a computer program from a memory and run the computer program, enabling a device equipped with the chip to perform the above-mentioned communication methods.

Embodiments of the present application provide a computer-readable storage medium for storing a computer program that, when run by a device, enables the device to perform the above-mentioned communication methods.

Embodiments of the present application provide a computer program product, including a computer program instruction that enables a computer to perform the above-mentioned communication methods.

Embodiments of the present application provide a computer program that, when run on a computer, enables the computer to perform the above-mentioned communication methods.

In the embodiments of the present application, determining whether to activate the artificial intelligence configuration through the format of the first DCI may reduce DCI overhead.

### BRIEF DESCRIPTION OF THE DRAWINGS

FIG. 1 is a schematic diagram of an application scenario, in accordance with embodiments of the present application.
FIG. 2 is a schematic diagram of AI/ML model selection.
FIG. 3 is a schematic flowchart of a communication method, in accordance with an embodiment of the present application.
FIG. 4 is a schematic flowchart of a communication method, in accordance with another embodiment of the present application.
FIG. 5 is a schematic flowchart of a communication method, in accordance with another embodiment of the present application.
FIG. 6 is a schematic flowchart of a communication method, in accordance with an embodiment of the present application.
FIG. 7 is a schematic flowchart of a communication method, in accordance with another embodiment of the present application.
FIG. 8 is a schematic flowchart of a communication method, in accordance with another embodiment of the present application.
FIG. 9 is a schematic diagram based on AI-specific scheduling DCI format 1.
FIG. 10 is a schematic diagram based on AI-specific scheduling DCI format 2.
FIG. 11 is a schematic diagram based on AI-specific scheduling DCI format 3.
FIG. 12 is a schematic diagram based on dedicated AI scheduling DCI and common DCI scheduling.
FIG. 13 is a schematic diagram based on dedicated AI switch-type DCI activating AI.
FIG. 14 is a schematic diagram of a selection of dedicated AI switch-type DCI.
FIG. 15 is a schematic block diagram of a first communication device, in accordance with an embodiment of the present application.
FIG. 16 is a schematic block diagram of a second communication device, in accordance with an embodiment of the present application.
FIG. 17 is a schematic block diagram of a communication device, in accordance with embodiments of the present application.
FIG. 18 is a schematic block diagram of a chip, in accordance with embodiments of the present application.
FIG. 19 is a schematic block diagram of a communication system, in accordance with embodiments of the present application.

### DETAILED DESCRIPTION

The technical solutions in embodiments of the present application will be described below with reference to the accompanying drawings in the embodiments of the present application.

The technical solutions in the embodiments of the present application may be applied to various communication systems, such as: long term evolution (LTE) systems, advanced long term evolution (LTE-A) systems, new radio (NR) systems, evolved systems of NR systems, LTE-based access to unlicensed spectrum (LTE-U) systems, NR-based access to unlicensed spectrum (NR-U) systems, non-terrestrial networks (NTN) systems, universal mobile telecommunication system (UMTS), wireless local area networks (WLAN), wireless fidelity (WiFi), 5th-generation (5G) systems, or other communication systems.

Generally, traditional communication systems support a limited number of connections and are relatively easy to be implemented. However, with the development of communication technology, mobile communication systems will not only support traditional communications but also, for example, device-to-device (D2D) communication, machine-to-machine (M2M) communication, machine type communication (MTC), vehicle-to-vehicle (V2V) communication, or vehicle-to-everything (V2X) communication. The embodiments of the present application may also be applied to these communication systems.

In one implementation, a communication system in the embodiments of the present application may be applied to carrier aggregation (CA) scenarios, also to dual connectivity (DC) scenarios, and further to standalone (SA) network deployment scenarios.

In one implementation, the communication system in the embodiments of the present application may be applied to unlicensed spectrum, where the unlicensed spectrum can also be considered as shared spectrum; alternatively, the communication system in the embodiments of the present application may be applied to licensed spectrum, where the licensed spectrum can be considered as non-shared spectrum.

In the embodiments of the present application, various embodiments are described in conjunction with a network device and a terminal device, in which the terminal device may also be referred to as user equipment (UE), an access terminal, a user unit, a user station, a mobile station, a mobile platform, a remote station, a remote terminal, a mobile device, a user terminal, a terminal, a wireless communication device, a user agent, or a user apparatus.

The terminal device may be a station (ST) in a WLAN, which may be a cellular phone, a cordless phone, a session initiation protocol (SIP) phone, a wireless local loop (WLL) station, a personal digital assistant (PDA) device, a handheld device with wireless communication capabilities, a computing device or another processing device connected to a wireless modem, an in-vehicle device, a wearable device, a terminal device in a next-generation communication system (such as an NR network), or a terminal device in a future evolved public land mobile network (PLMN).

In the embodiments of the present application, the terminal device may be deployed on land, including indoors or outdoors, handheld, worn, or vehicle-mounted; the terminal device may also be deployed on water (such as on ships); and the terminal device may further be deployed in the air (such as on airplanes, balloons, and satellites).

In the embodiments of the present application, the terminal device may be a mobile phone, a tablet computer (Pad), a computer with wireless transceiver capabilities, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in a smart city, or a wireless terminal device in a smart home.

As an example rather than a limitation, in the embodiments of the present application, the terminal device may also be a wearable device. The wearable device, also known as a wearable smart device, is a generic term for devices capable of being worn, developed by applying wearable technology to intelligently design daily wear, such as glasses, gloves, watches, clothing, and shoes. The wearable device is a portable device capable of being worn directly on the body or integrated into the user's clothing or accessories. The wearable device is not only a hardware device but also achieves powerful functions through software support, data interaction, and cloud interaction. Wearable smart devices, in a broad sense, include those with full functionality, large size and the ability to realize complete or partial functions without relying on a smartphone, such as smartwatches or smart glasses, as well as those that focus only on a certain type of application function and need to be used in conjunction with other devices like smartphones, such as various smart bands and smart jewelry for monitoring vital signs.

In the embodiments of the present application, the network device may be a device for communicating with mobile devices. The network device may be an access point (AP) in a WLAN, which may be an evolved node B (eNB or eNodeB) in LTE, a relay station or access point, an in-vehicle device, a wearable device, a network device (gNB) in an NR network, a network device in a future evolved PLMN network, or a network device in an NTN network.

As an example rather than a limitation, in the embodiments of the present application, the network device may have mobile characteristics, for example, the network device may be a movable device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station set up in locations on land, in water, etc.

In the embodiments of the present application, a network device may provide service for a cell, and the terminal device communicates with the network device through transmission resources (e.g., frequency domain resources, also known as spectrum resources) used by the cell. The cell may be a cell corresponding to the network device (e.g., a base station). The cell may belong to a macro base station or a base station corresponding to a small cell. Here, the small cells may include a metro cell, a micro cell, a pico cell, a femto cell, etc. These small cells, which are characterized by small coverage and low transmission power, are suitable for providing high-speed data transmission services.

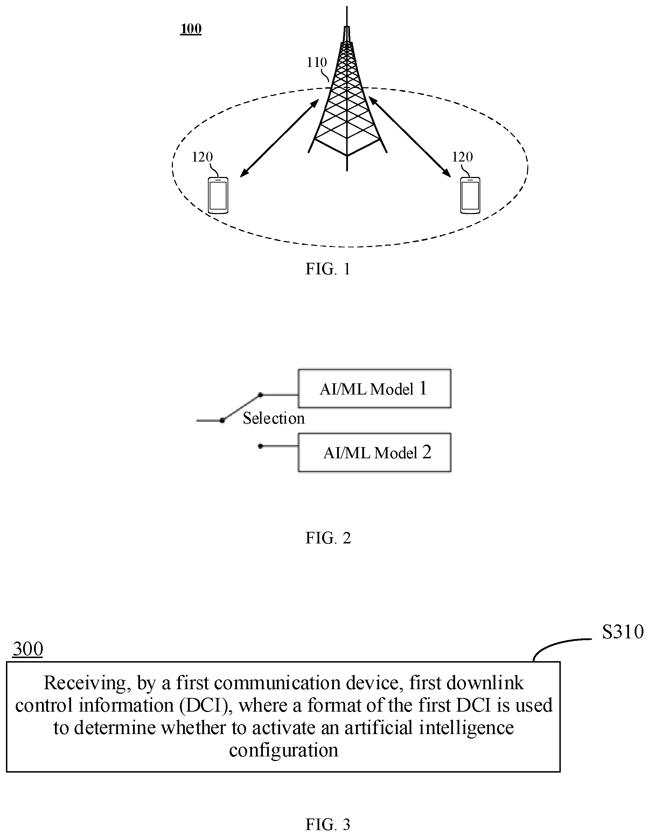

FIG. 1 exemplarily illustrates a communication system 100. The communication system includes one network device 110 and two terminal devices 120. In one implementation, the communication system 100 may include multiple network devices 110, and there may be another number of terminal devices 120 in the coverage area of each network device 110, which is not limited in the embodiments of the present application.

In one implementation, the communication system 100 may further include other network entities such as a mobility management entity (MME) and an access and mobility management function (AMF), which is not limited in the embodiments of the present application.

Furthermore, the network devices may include an access network device and a core network device. That is, a wireless communication system further includes multiple core networks for communicating with access network devices. The access network device may be an evolutional node B (eNB or e-NodeB), a macro base station, a micro base station (also known as a "small base station"), a pico base station, an access point (AP), a transmission point (TP), or a new generation node B (gNodeB) in a long-term evolution (LTE) system, a next radio (NR) (mobile communication) system, or an authorized auxiliary access long-term evolution (LAA-LTE) system.

It should be understood that a device with communication capabilities in the network/system in the embodiments of the present application may be referred to as a communication device. Taking the communication system shown in FIG. 1 as an example, communication devices may include a network device and a terminal device with communication capabilities, in which the network device and the terminal device may be specific devices in the embodiments of the present application, which will not be described again here. The communication devices may further include other devices in the communication system, such as a network controller, a mobility management entity, and other network entities, which are not limited in the embodiments of the present application.

It should be understood that the terms "system" and "network" are often used interchangeably herein. The term "and/or" herein is merely a way of describing an association relationship between associated objects, indicating that three relationships may exist. For example, A and/or B may mean: A exists alone, both A and B exist simultaneously, and B exists alone. In addition, the character "/" herein generally indicates that the associated objects before and after this character have an "or" relationship.

It should be understood that the "indicate" mentioned in the embodiments of the present application may mean a direct indication or an indirect indication, or indicate that there is an association relationship. To illustrate with an example, A indicates B, which may indicate that A directly indicates B, for example, that B may be obtained through A; or may indicate that A indirectly indicates B, for example, that A indicates C, and B may be obtained through C; or may indicate that there is an association relationship between A and B.

In the description of the embodiments of the present application, the term "corresponding" may indicate that there is a direct or indirect correspondence relationship between the two, or it may indicate that there is an association relationship between the two, or it may refer to relationships such as indicating and being indicated, configurating and being configured.

To facilitate the understanding of the technical solutions of the embodiments of the present application, the relevant technologies of the embodiments of the present application will be described below. The following relevant technologies, as optional solutions, may be combined with the technical solutions of the embodiments of the present application in any way, all of which fall within the protection scope of the embodiments of the present application.

A 5G or 6G air interface system may, in suitable application scenarios, activate or select an AI/ML model for a certain functionality or feature to replace traditional non-AI/ML technical solutions. An example of a technical solution for AI/ML model activation and selection is as follows:

If there is an AI/ML model for a functionality and/or feature, the 5G or 6G system may perform configuration based on the terminal's capability reporting. For example, a set of AI/ML models available for being activated may be configured, such as AI/ML model 1 and AI/ML model 2 shown in FIG. 2, and the network may then select and activate an AI/ML model from this set.

Among AI/ML models specially optimized for application scenarios, different AI/ML models may be suitable for different deployment scenarios. In a case of detecting that one AI/ML model is not performing well, the network may switch to another AI/ML model through indication information, a process known as model switching. For example, as a terminal moves from one cell to another, the deployment scenario may change significantly, causing an AI/ML model used originally to be unsuitable for the new deployment scenario. After detecting performance degradation, the network needs to switch to another model adapted to the current deployment scenario.

In one approach, the network may configure and select AI/ML models through connection state indication information, such as radio resource control (RRC) or downlink control information (DCI). However, the content of DCI fields required by AI/ML algorithms differs significantly from that required by non-AI/ML algorithms. If a single DCI format is used to accommodate both AI/ML and non-AI/ML operations, and a single set of RRC configurations is employed to support scheduling for both AI/ML and non-AI/ML resources, this DCI format will incur high overhead, resulting in low efficiency. For example, the DCI needs to contain fields for both non-AI/ML resource scheduling and AI/ML inference and training, so the DCI overhead will be increased significantly. If each AI/ML-related field in a single DCI format is individually added with an indicator for activating AI/ML functionality, feature, or model, a large number of indicators will be required for addition, which will also cause a significant increase in the DCI overhead. If the DCI format does not contain these indicators, dynamic activation/deactivation of AI/ML functionalities, features, or models cannot be achieved.

FIG. 3 is a schematic flowchart of a communication method 300, in accordance with an embodiment of the present application. This method may, optionally, be applied to the system shown in FIG. 1, but is not limited thereto. The method includes at least part of the following content:
a step S310, in which a first communication device receives first downlink control information (DCI), where a format of the first DCI is used to determine whether to activate an artificial intelligence configuration.

In embodiments of the present application, the first communication device may receive the first DCI from a second communication device. In one example, the first communication device is a terminal device, and the second communication device is a network device. After receiving the first DCI from the network device, the terminal device may determine whether to activate the artificial intelligence configuration based on the format of the first DCI. By using the first DCI with a specific format to indicate whether to activate the artificial intelligence configuration, this DCI may be dedicated to artificial intelligence-based configuration, thereby reducing DCI overhead.

In one implementation, the artificial intelligence configuration includes at least one of the following: configuration information of one or more artificial intelligence (AI) or machine learning (ML) functionalities; configuration information of one or more AI or ML features; or configuration information of one or more AI or ML models.

In one implementation, the artificial intelligence configuration is carried in a radio resource control (RRC) configuration. In embodiments of the present application, if detecting the first DCI, the terminal device may determine whether to use an AI functionality, feature, or model based on the artificial intelligence configuration in the RRC configuration. The RRC configuration may include one or more types. For example, the RRC configuration may include a first RRC configuration and a second RRC configuration.

In one implementation, the format of the first DCI is a first format, and the first format is used to activate a first RRC configuration. In embodiments of the present application, if the terminal device detects the first DCI with the first format, and the first RRC configuration includes configuration information of a first AI functionality, feature, or model, the terminal device may determine to start using the first AI functionality, feature, or model; and if the terminal device detects the first DCI with the first format, and the first RRC configuration includes configuration information of multiple AI functionalities, features, or models, the terminal device may determine to start using all AI functionalities, features, or models configured in the first RRC configuration.

In one implementation, the first DCI includes a first indicator, where the first indicator having a first value indicates to activate the first RRC configuration, and/or the first indicator having a second value indicates to deactivate the first RRC configuration. In embodiments of the present application, if the terminal device detects the first DCI with the first format, and the first DCI may include the first indicator for indicating whether to activate the first RRC configuration, in a case where a value of the first indicator is the first value, e.g., 1, the first indicator may indicate to activate the first RRC configuration, that is, to activate an artificial intelligence configuration in the first RRC configuration, and in a case where the value of the first indicator is the second value, e.g., 0, the first indicator may indicate to deactivate the first RRC configuration, that is, to deactivate the artificial intelligence configuration in the first RRC configuration. For example, in a case where all AI functionalities, features, or models configured in the first RRC configuration are in an activated state, if the terminal device detects the first DCI with the first format, the terminal device may deactivate all AI functionalities, features, or models configured in the first RRC configuration. The specific values of the first value, second value, etc., in the embodiments of the present application are merely examples and not limitations, and may be flexibly changed in practical applications. For example, the first value is 0 and the second value is 1; or the first value is 00 and the second value is 10.

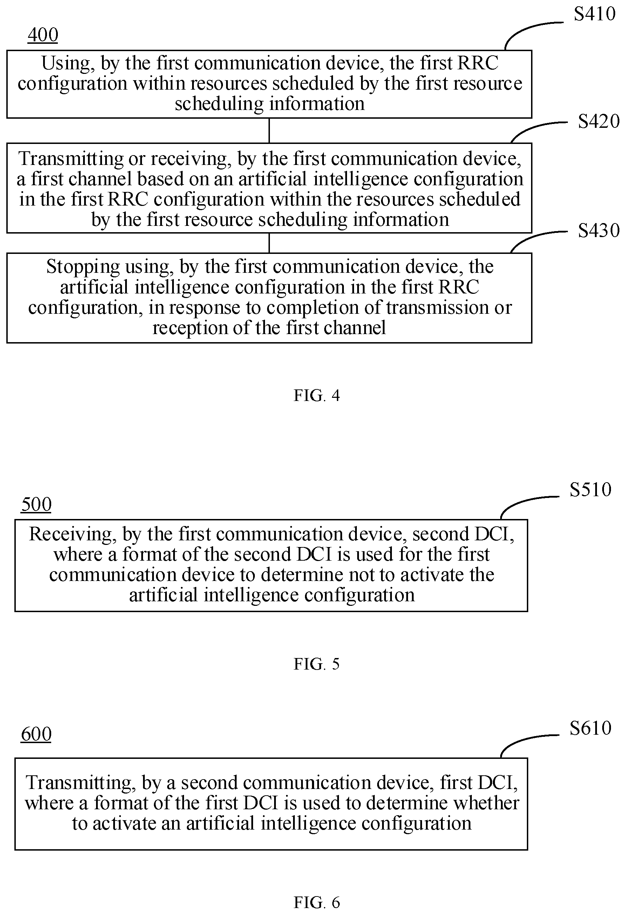

FIG. 4 is a schematic flowchart of a communication method 400, in accordance with another embodiment of the present application. This method may include one or more features of the above-mentioned method. In one implementation, the first DCI includes first resource scheduling information, and the method further includes: a step S410, in which the first communication device uses the first RRC configuration within resources scheduled by the first resource scheduling information.

In embodiments of the present application, the first resource scheduling information may include time-frequency resource allocation information. If detecting the first DCI with the first format, the terminal device may use at least one of all AI functionalities, features, or models configured in the first RRC configuration only for time-frequency resources scheduled by the first DCI.

In one implementation, a step S410, in which the first communication device uses the first RRC configuration within the resources scheduled by the first resource scheduling information, includes:
a step S420, in which the first communication device transmits or receives a first channel based on an artificial intelligence configuration in the first RRC configuration within the resources scheduled by the first resource scheduling information; and
a step S430, in which the first communication device stops using the artificial intelligence configuration in the first RRC configuration, in response to completion of transmission or reception of the first channel.

In embodiments of the present application, the first channel may be an uplink channel or a downlink channel. If the first communication device is a terminal device, the second communication device is a network device. The first communication device may transmit an uplink channel to the second communication device based on the artificial intelligence configuration or receive a downlink channel from the second communication device based on the artificial intelligence configuration within the resources scheduled by the first resource scheduling information. For example, assuming that the first DCI with the first format schedules the first channel, all AI functionalities, features, or models configured in the first RRC configuration are used to transmit or receive the first channel, within the time-frequency resources scheduled by the first DCI.

In one implementation, the first DCI includes a first indicator, where the first indicator having a first value indicates to activate the first RRC configuration within the resources scheduled by the first resource scheduling information, and/or the first indicator having a second value indicates to deactivate the first RRC configuration within the resources scheduled by the first resource scheduling information. For example, if a value of the first indicator in the first DCI with the first format is the first value, e.g., 1, the artificial intelligence configuration in the first RRC configuration may be activated within the resources scheduled by the first resource scheduling information in the first DCI; and if the value of the first indicator is the second value, e.g., 0, the artificial intelligence configuration of the first RRC configuration is deactivated within the resources scheduled by the first resource scheduling information in the first DCI.

In one implementation, the first DCI includes a second indicator, where the second indicator having a third value indicates to activate the first RRC configuration, and/or the second indicator having a fourth value indicates to activate a second RRC configuration. In embodiments of the present application, the terminal device may include multiple RRC configurations with artificial intelligence configurations, such as the first RRC configuration and the second RRC configuration. In response to detecting the first DCI with the first format, the terminal device may determine which artificial intelligence configuration in an RRC configuration to be activated based on the value of the second indicator in the first DCI. For example, if the value of the second indicator is the third value, e.g., 11, the artificial intelligence configuration in the first RRC configuration may be activated; and if the value of the second indicator is the fourth value, e.g., 00, the artificial intelligence configuration in the second RRC configuration may be activated.

In one implementation, the second indicator having a fifth value indicates to deactivate the RRC configuration. In embodiments of the present application, in a case of having already activated one or more RRC configurations, the terminal device may perform deactivation through the second indicator in the first DCI. For example, if the terminal device has already activated the artificial intelligence configuration in the first RRC configuration, and the second indicator has the fifth value, e.g., 10, the artificial intelligence configuration in the first RRC configuration may be deactivated. As another example, if the terminal device has already activated the artificial intelligence configuration in the second RRC configuration, and the second indicator has the fifth value, e.g., 11, the artificial intelligence configuration in the second RRC configuration may be deactivated. As yet another example, if the terminal device has activated the artificial intelligence configurations in both the first RRC configuration and the second RRC configuration, and the second indicator has the fifth value, e.g., 01, the artificial intelligence configurations in both the first RRC configuration and the second RRC configuration may be deactivated, or the artificial intelligence configuration in either the first RRC configuration or the second RRC configuration may be randomly deactivated. Furthermore, the second indicator may use two different values to indicate whether to deactivate the artificial intelligence configuration in the first RRC configuration or the second RRC configuration, respectively.

In one implementation, the first DCI includes a second indicator, where the second indicator having a third value indicates to activate the first RRC configuration within the resources scheduled by the first resource scheduling information in the first DCI, and/or the second indicator having a fourth value indicates to activate a second RRC configuration within the resources scheduled by the first resource scheduling information in the first DCI. For example, the terminal device detects the first DCI with the first format. If a value of the second indicator is the third value, e.g., 11, the artificial intelligence configuration in the first RRC configuration may be activated within the resources scheduled by the first resource scheduling information in the first DCI; and if the value of the second indicator is the fourth value, e.g., 00, the artificial intelligence configuration in the second RRC configuration may be activated within the resources scheduled by the first resource scheduling information in the first DCI.

In one implementation, the second indicator having a fifth value indicates to deactivate the RRC configuration within the resources scheduled by the first resource scheduling information. For example, if the terminal device has already activated the artificial intelligence configuration in the first RRC configuration and/or the artificial intelligence configuration in the second RRC configuration, and the second indicator has the fifth value, e.g., 10, the artificial intelligence configuration(s) in one or more activated RRC configurations may be deactivated within the resources scheduled by the first resource scheduling information in the first DCI.

FIG. 5 is a schematic flowchart of a communication method 500, in accordance with another embodiment of the present application. This method may include one or more features of the above-mentioned method. In one implementation, the method further includes:
a step S510, in which the first communication device receives second DCI, where a format of the second DCI is used for the first communication device to determine not to activate the artificial intelligence configuration.

In embodiments of the present application, different DCI formats may be used to indicate to activate and not activate the artificial intelligence configuration, respectively. For example, the first DCI with the first format indicates to activate the artificial intelligence configuration, and the second DCI with a second format indicates to not activate the artificial intelligence configuration. As detecting the second DCI with the second format, the terminal device employs traditional communication methods for subsequent processing, instead of activating the artificial intelligence configuration.

In one implementation, the format of the second DCI is a second format, and the second format is used to determine not to use the first RRC configuration. In embodiments of the present application, the first format of the first DCI is different from the second format of the second DCI. For example, the first format is DCI Format 0, and the second format is DCI Format 1.

In one implementation, the second DCI includes second resource scheduling information, and the second resource scheduling information is used to indicate the first communication device not to use the first RRC configuration within resources scheduled by the second resource scheduling information.

For example, as the terminal device detecting the second DCI with the second format, based on the information in the second DCI, the terminal device may use traditional communication methods for subsequent processing, instead of using the artificial intelligence configuration in the second RRC configuration within time-frequency resources scheduled by the second resource scheduling information in the second DCI.

In one implementation, the second resource scheduling information is used to indicate the first communication device to transmit or receive a second channel without using an artificial intelligence configuration in the first RRC configuration within the resources scheduled by the second resource scheduling information.

For example, it is assumed that the first channel scheduled by the first DCI with the first format and the second channel scheduled by the second DCI with the second format are transmitted simultaneously. The first channel is transmitted or received using all AI functionalities, features, or models configured in the first RRC configuration within the time-frequency resources scheduled by the first DCI. The second channel is transmitted or received without using any AI functionalities, features, or models within the time-frequency resources scheduled by the second DCI.

FIG. 6 is a schematic flowchart of a communication method 600, in accordance with an embodiment of the present application. This method may, optionally, be applied to the system shown in FIG. 1, but is not limited thereto. The method includes at least part of the following content:
a step S610, in which a second communication device transmits first DCI, where a format of the first DCI is used to determine whether to activate an artificial intelligence configuration.

In one implementation, the artificial intelligence configuration includes at least one of the following: configuration information of one or more AI or ML functionalities; configuration information of one or more AI or ML features; or configuration information of one or more AI or ML models.

In one implementation, the artificial intelligence configuration is carried in an RRC configuration.

In one implementation, the format of the first DCI is a first format, and the first format is used to activate a first RRC configuration.

In one implementation, the first DCI includes a first indicator, where the first indicator having a first value indicates to activate a first RRC configuration, and/or the first indicator having a second value indicates to deactivate the first RRC configuration.

In one implementation, the first DCI includes first resource scheduling information, and the first resource scheduling information is used to indicate a first communication device to activate the first RRC configuration within resources scheduled by the first resource scheduling information.

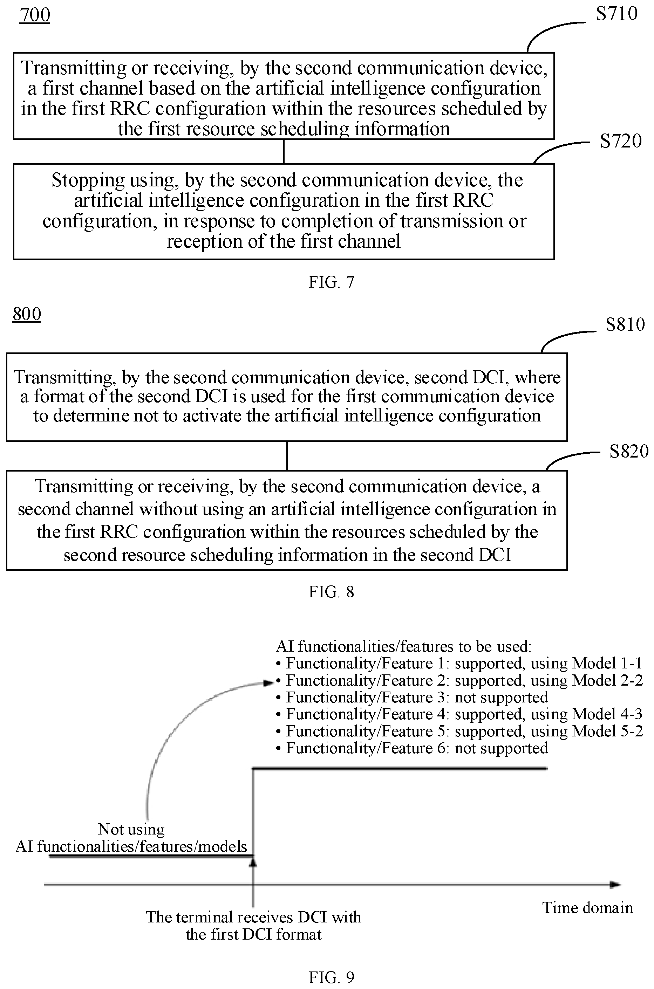

FIG. 7 is a schematic flowchart of a communication method 700, in accordance with another embodiment of the present application. The method may include one or more features of the above-mentioned methods. In one implementation, the method further includes:
a step S710, in which the second communication device transmits or receives a first channel based on the artificial intelligence configuration in the first RRC configuration within the resources scheduled by the first resource scheduling information; and
a step S720, in which the second communication device stops using the artificial intelligence configuration in the first RRC configuration, in response to completion of transmission or reception of the first channel.

In one implementation, the first DCI includes a first indicator, where the first indicator having a first value indicates to activate the first RRC configuration within the resources scheduled by the first resource scheduling information, and/or the first indicator having a second value indicates to deactivate the first RRC configuration within the resources scheduled by the first resource scheduling information.

In one implementation, the first DCI includes a second indicator, where the second indicator having a third value indicates to activate the first RRC configuration, and/or the second indicator having a fourth value indicates to activate a second RRC configuration.

In one implementation, the second indicator having a fifth value indicates to deactivate the RRC configuration.

In one implementation, the first DCI includes a second indicator, where the second indicator having a third value indicates to activate the first RRC configuration within the resources scheduled by the first resource scheduling information in the first DCI, and/or the second indicator having a fourth value indicates to activate a second RRC configuration within the resources scheduled by the first resource scheduling information.

In one implementation, the second indicator having a fifth value indicates to deactivate the RRC configuration within the resources scheduled by the first resource scheduling information.

FIG. 8 is a schematic flowchart of a communication method 800, in accordance with another embodiment of the present application. The method may include one or more features of the above-mentioned methods. In one implementation, the method further includes: a step S810, in which the second communication device transmits second DCI, where a format of the second DCI is used for the first communication device to determine not to activate the artificial intelligence configuration.

In one implementation, the format of the second DCI is a second format, and the second format is used to determine not to use the first RRC configuration.

In one implementation, the second DCI includes second resource scheduling information, and the second resource scheduling information is used to indicate the first communication device not to use the first RRC configuration within resources scheduled by the second resource scheduling information.

In one implementation, the method further includes: a step S820, in which the second communication device transmits or receives a second channel without using an artificial intelligence configuration in the first RRC configuration within the resources scheduled by the second resource scheduling information in the second DCI.

For specific examples of the second communication device in embodiments performing methods 600, 700, and 800, reference may be made to the relevant descriptions of the second communication device, e.g., a network device, in the above-mentioned methods 300, 400, and 500. To maintain brevity, the details are not reiterated here.

The communication methods in the embodiments of the present application provide a dedicated DCI format for AI/ML-based air interface operations, specifically for activating, deactivating, and selecting AI/ML functionalities, features, or models. In this way, it is possible to avoid containing, within a single DCI format, both scheduling information of AI/ML functionalities, features, or models and resource scheduling information using non-AI/ML algorithms, thereby improving DCI signaling efficiency and preventing an increase in DCI signaling overhead. Furthermore, DCI using a dedicated AI/ML DCI format may be detected through a terminal, so as to batch-activate various AI/ML functionalities, features, or models of an RRC configuration. Compared to using a large number of indicators in DCI to activate each AI/ML functionality, feature, or model individually, the methods may further reduce DCI overhead.

The technical solutions in the embodiments of the present application mainly include the aspects as follows.

First, all AI functionalities, features, or models of an RRC configuration are activated based on dedicated AI DCI formats, such as a first DCI format (which may be an uplink DCI format, a downlink DCI format, or a sidelink DCI format). As detecting DCI with the first DCI format, a terminal determines whether to use AI functionalities, features, or models based on a first RRC configuration. The first RRC configuration contains configuration information of at least one AI functionality, feature, or model. If the first RRC configuration contains information of a first AI functionality, feature, or model, then as detecting the DCI with the first DCI format, the terminal determines to start using the first AI functionality, feature, or model.

Second, all AI functionalities, features, or models of the RRC configuration are batch-activated based on a DCI format. If the first RRC configuration contains information of multiple AI functionalities, features, or models, then as detecting the DCI with the first DCI format, the terminal determines to start using all AI functionalities, features, or models configured in the first RRC configuration.

Scheme 1 of activation mode: one-time use of AI functionalities, features, or models via AI/ML-specific scheduling DCI. For example, if the first DCI format may contain time-frequency resource allocation information, then as detecting the DCI with the first DCI format, the terminal uses all AI functionalities, features, or models configured in the first RRC configuration only for time-frequency resources scheduled by this DCI.

Situation of simultaneous use of AI/ML-specific scheduling DCI and non-AI/ML scheduling DCI. For example, when a channel scheduled by DCI with the first DCI format and a channel scheduled by DCI with a second DCI format are transmitted simultaneously, all AI functionalities, features, or models configured in the first RRC configuration are used for time-frequency resources scheduled by the DCI with the first DCI format, and no AI functionalities, features, or models are to be used for time-frequency resources scheduled by the DCI with the second DCI format.

A selection is performed on multiple sets of AI functionalities, features, or models by AI/ML-specific scheduling DCI. For example, the first DCI format includes a second indicator. If the second indicator has a first value, AI functionalities, features, or models configured in the first RRC configuration are selected for use; and if the second indicator has a second value, AI functionalities, features, or models configured in a second RRC configuration are selected for use.

Scheme 2 of activation mode: switch-type DCI activation of AI functionalities, features, or models. For example, as detecting DCI with the first DCI format, the terminal determines to activate all AI functionalities, features, or models configured in the first RRC configuration. In a case where all AI functionalities, features, or models configured in the first RRC configuration are in an active state, and the terminal detects the DCI with the first DCI format, the terminal determines to deactivate all AI functionalities, features, or models configured in the first RRC configuration.

In some examples, the first DCI format does not contain time-frequency resource allocation information.

Activation is performed on AI functionalities, features, or models by AI/ML switch-type DCI, for the transmission of channels scheduled by non-AI/ML DCI. In a case where AI functionalities, features, or models configured in the first RRC configuration are in an active state, the AI functionalities, features, or models configured in the first RRC configuration are used for time-frequency resources scheduled by DCI with the second DCI format. In a case where the AI functionalities, features, or models configured in the first RRC configuration are in a deactivated state, no AI functionalities, features, or models are to be used for the time-frequency resources scheduled by the DCI with the second DCI format. In some examples, the first DCI format contains a first indicator. If the first indicator has a first value, the AI functionalities, features, or models configured in the first RRC configuration are activated; and if the first indicator has a second value, the AI functionalities, features, or models configured in the first RRC configuration are deactivated.

A selection may be performed on multiple sets of AI functionalities, features, or models by the AI/ML switch-type DCI. For example, the first DCI format includes a second indicator. If the second indicator has a first value, the AI functionalities, features, or models configured in the first RRC configuration are selected for use; and if the second indicator has a second value, the AI functionalities, features, or models configured in the second RRC configuration are selected for use. In some examples, if the second indicator has a third value, it is determined that no AI functionalities, features, or models are to be used.

### Example 1: batch-activation of all AI functionalities, features, or models of an RRC configuration based on a first DCI format.

An example of AI functionality, feature, or model configuration of a first RRC configuration is shown in Table 1. It is assumed that among AI functionalities/features 1 to 6, the RRC configuration supports AI functionalities/features 1, 2, 4, and 5, but does not support AI functionalities/features 3 and 6, where
for AI functionality/feature 1, the RRC configuration uses AI/ML model 1-1;
for AI functionality/feature 2, the RRC configuration uses AI/ML model 2-2;
for AI functionality/feature 4, the RRC configuration uses AI/ML model 4-3; and
for AI functionality/feature 5, the RRC configuration uses AI/ML model 5-2.

**Table 1: AI functionality, feature, or model configuration of the first RRC configuration**

| | |
|---|---|
| AI functionality/feature configuration: | Functionality/Feature 1: Supported |
| | Functionality/Feature 2: Supported |
| | Functionality/Feature 3: Not Supported |
| | Functionality/Feature 4: Supported |
| | Functionality/Feature 5: Supported |
| | Functionality/Feature 6: Not Supported |
| Model used for AI functionality/feature 1: | Model 1-1 |
| Model used for AI functionality/feature 2: | Model 2-2 |
| Model used for AI functionality/feature 4: | Model 4-3 |
| Model used for AI functionality/feature 5: | Model 5-2 |

In the DCI, each AI functionality and/or feature may be added with an indicator to determine whether to use this AI functionality and/or feature through a value of the indicator. In the DCI, it is further possible to introduce an indicator of an AI/ML model ID for each AI functionality and/or feature, to indicate which AI/ML model is to be used for this AI functionality/feature. However, this method will significantly increase DCI overhead.

The first DCI format of the embodiments of the present application may include no indicators for AI functionalities, features, or models. Instead, as detecting this DCI format, the terminal directly activates various AI functionalities, features, or models of the RRC configuration. As shown in FIG. 9, all AI functionalities, features, or models of the RRC configuration are batch-activated based on a dedicated AI scheduling DCI format. For example, a terminal, in a state of not using AI functionalities, features, or models, receives DCI with the first DCI format. After the terminal receives this DCI, the AI functionalities, features, or models that the terminal starts to use may be shown in Table 1. For example, functionality/feature 1 supports using model 1-1; functionality/feature 2 supports using model 2-2; functionality/feature 3 does not support using models; functionality/feature 4 supports using model 4-3; functionality/feature 5 supports using model 5-2; and functionality/feature 6 does not support using models.

This example employs a DCI format specifically for AI/ML, which may be dedicated to activating AI/ML functionalities, features, or models, so as to avoid containing, within a single DCI format, both scheduling information of AI/ML functionalities, features, or models and resource scheduling information using non-AI/ML algorithms, thereby improving DCI signaling efficiency and preventing an increase in DCI signaling overhead. Furthermore, DCI using a dedicated AI/ML DCI format may be detected through a terminal, so as to batch-activate various AI/ML functionalities, features, or models of an RRC configuration. Compared to using a large number of indicators in DCI to activate each AI/ML functionality, feature, or model individually, the example may further reduce DCI overhead.

### Example 2: one-time activation of AI functionalities, features, or models of an RRC configuration for scheduled resources based on dedicated AI scheduling DCI.

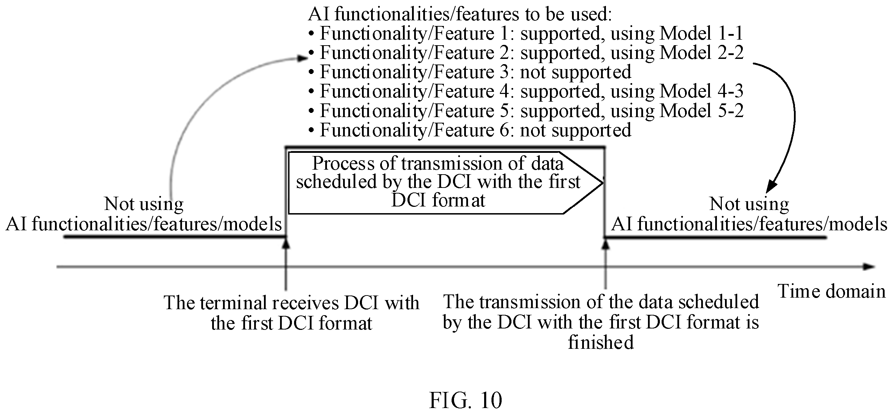

In this example, a first DCI format contains time-frequency resource allocation information. As detecting DCI with the first DCI format, a terminal uses all AI functionalities, features, or models configured in a first RRC configuration only for time-frequency resources allocated by the DCI. As shown in FIG. 10, based on an AI-specific scheduling DCI format, AI functionalities, features, or models of an RRC configuration may be activated one time for the scheduled resources. For example, after receiving the DCI with the first DCI format, the terminal starts transmission of relevant channels (such as a physical downlink shared channel (PDSCH), a physical uplink shared channel (PUSCH), a physical uplink control channel (PUCCH), or a physical sidelink shared channel (PSSCH)) in the scheduled resources according to the resource scheduling information in the DCI, and uses AI functionalities, features, or models during the transmission of these channels. The AI functionalities, features, or models to be used may be referenced in Table 1. As the transmission of these channels is finished, for example, as the transmission of data scheduled by the DCI with the first DCI format is finished, the use of the AI functionalities, features, or models configured in the first RRC configuration is automatically stopped.

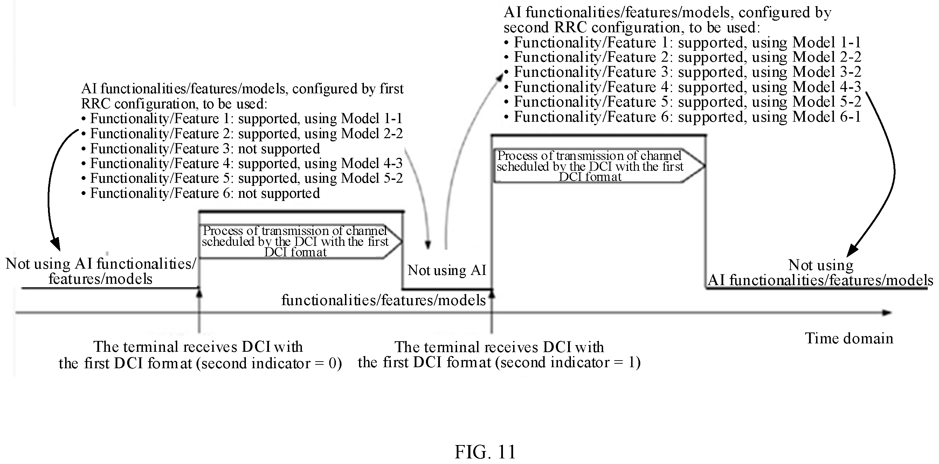

Optionally, the first DCI format may further include a first indicator, and may perform a selection among multiple sets of AI functionalities, features, or models through this indicator. As shown in FIG. 11, based on an AI-specific scheduling DCI format, among multiple sets of AI functionalities, features, or models, a second DCI format may be selected as a DCI format for scheduling resources that use non-AI/ML algorithms. For example, after a terminal receives DCI with the first DCI format and a value of the first indicator in the DCI is 0, the terminal starts transmission of relevant channels (such as PDSCH, PUSCH, PUCCH, or PSSCH) in the scheduled resources according to the resource scheduling information in the DCI, and uses AI functionalities, features, or models configured in a first RRC configuration during the transmission of these channels. The AI functionalities, features, or models configured in the first RRC configuration to be used may be referenced in Table 1. As the transmission of these channels is finished, the use of the AI functionalities, features, or models configured in the first RRC configuration is automatically stopped. After the terminal receives the DCI with the first DCI format and the value of the first indicator is 1, the terminal starts transmission of relevant channels (such as PDSCH, PUSCH, PUCCH, or PSSCH) in the scheduled resources according to the resource scheduling information in the DCI, and uses AI functionalities, features, or models configured in a second RRC configuration during the transmission of these channels. The AI functionalities, features, or models configured in the first RRC configuration to be used may include: functionality/feature 1 supporting model 1-1; functionality/feature 2 supporting model 2-2; functionality/feature 3 supporting model 3-2; functionality/feature 4 supporting model 4-3; functionality/feature 5 supporting model 5-2; and functionality/feature 6 supporting model 6-1. As the transmission of these channels is finished, the use of the AI functionalities, features, or models configured in the second RRC configuration is automatically stopped.

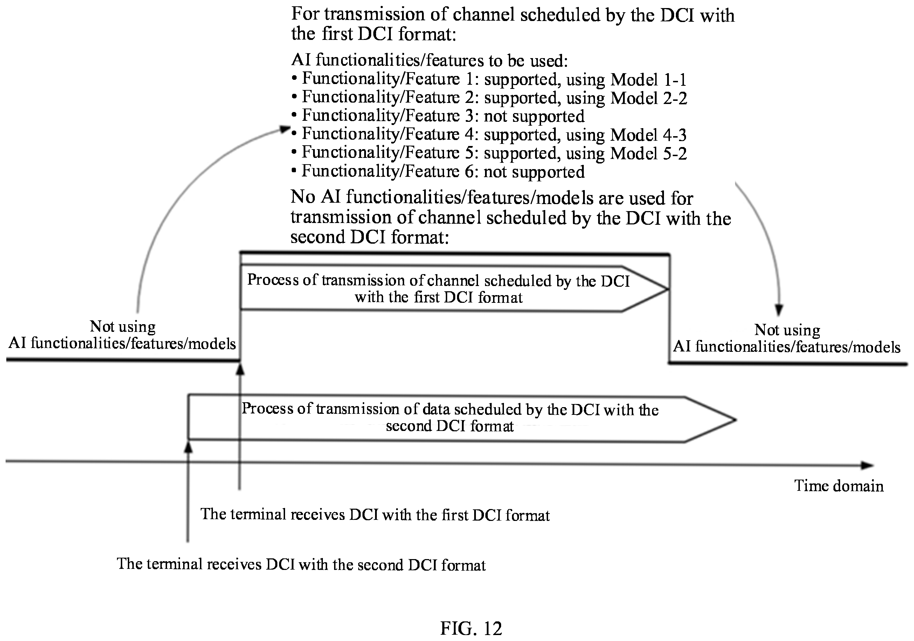

As shown in FIG. 12, for resources scheduled by dedicated AI scheduling DCI and resources scheduled by common DCI, AI functionalities, features, or models may be used and may not be used, respectively. For example, when a channel scheduled by the first DCI format and a channel scheduled by the second DCI format are transmitted simultaneously, all AI functionalities, features, or models configured in the first RRC configuration are used for the transmission of the channel scheduled by the first DCI format (an example of the AI functionalities, features, or models that are to be used for the transmission of the channel scheduled by the DCI with the first DCI format may be referenced in Table 1), and no AI functionalities, features, or models are used for the transmission of the channel scheduled by the second DCI format.

In this example, in a case where the DCI with the first DCI format activates AI functionalities, features, or models of an RRC configuration, these AI functionalities, features, or models are used only for resources scheduled by this DCI. As the transmission of the relevant channels transmitted using the scheduled resources is finished, the use of these functionalities, features, or models is automatically stopped. This method allows for targeted, on-demand, one-time activation/deactivation of AI functionalities, features, or models, which may prevent the continued use of these AI functionalities, features, or models for channel transmissions for which these AI functionalities, features, or models are not suitable after the transmission of the relevant channel is finished, thereby improving system reliability. When a channel scheduled by the first DCI format and a channel scheduled by the second DCI format are transmitted simultaneously, it is also possible to use AI functionalities, features, or models for the channel scheduled by the first DCI format, and use no AI functionalities, features, or models for the channel scheduled by the second DCI format, which further enhances the flexibility of applications of AI functionalities, features, or models.

### Example 3: Activation of AI functionalities, features, or models via dedicated AI switch-type DCI.

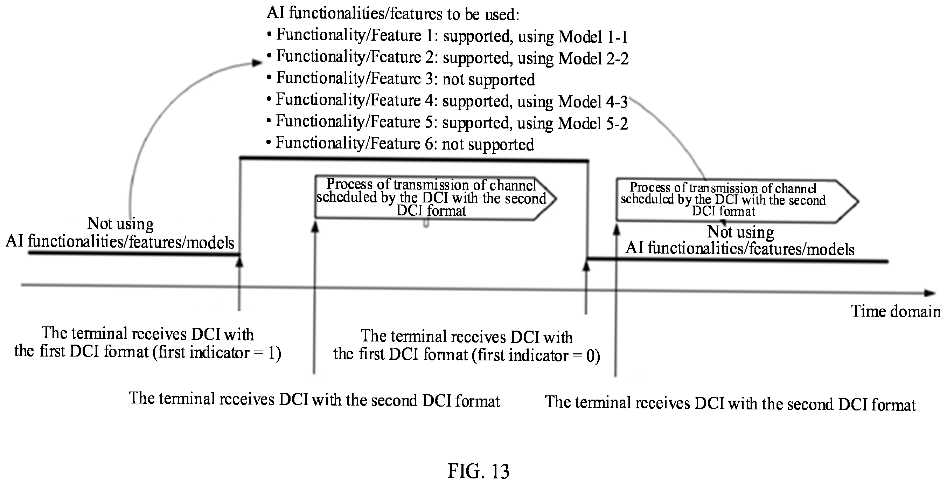

In this example, a first DCI format activates the AI functionalities, features, or models configured in a first RRC configuration, for the transmission of a channel scheduled by a second DCI format. As shown in FIG. 13, dedicated AI switch-type DCI activates AI functionalities, features, or models, for the transmission of channels scheduled by common DCI. For example, after receiving DCI with the first DCI format (optionally, with a first indicator included therein having a value of 1), the terminal activates the AI functionalities, features, or models configured in the first RRC configuration, where the AI functionalities, features, or models to be used may be referenced in Table 1. In a case where these AI functionalities, features, or models are in an active state, after receiving DCI with a second DCI format, the terminal may perform a process of the transmission of a channel scheduled by the DCI with the second DCI format, and use these AI functionalities, features, or models for time-frequency resources scheduled by this DCI. As the terminal again receives DCI with the first DCI format (optionally, with the first indicator included therein having the value of 0), the AI functionalities, features, or models configured in the first RRC configuration are deactivated, that is, without using the AI functionalities, features, or models. In a case where these AI functionalities, features, or models are in a deactivated state, as receiving DCI with the second DCI format, the terminal may perform the process of the transmission of a channel scheduled by the DCI with the second DCI format, and will no longer use the AI functionalities, features, or models for time-frequency resources scheduled by this DCI.

Optionally, the DCI with the first DCI format includes a first indicator. In a case where a value of the first indicator is 1, the AI functionalities, features, or models configured in the first RRC configuration are activated; and in a case where the value of the first indicator is 0, the AI functionalities, features, or models configured in the first RRC configuration are deactivated.

It is assumed that a second RRC configuration is also configured, as shown in Table 2. The RRC configuration supports all AI functionalities/features 1, 2, 3, 4, 5, and 6, where
for AI functionality/feature 1, the RRC configuration uses AI/ML model 1-1;
for AI functionality/feature 2, the RRC configuration uses AI/ML model 2-2;
for AI functionality/feature 3, the RRC configuration uses AI/ML model 3-2;
for AI functionality/feature 4, the RRC configuration uses AI/ML model 4-3;
for AI functionality/feature 5, the RRC configuration uses AI/ML model 5-2; and
for AI functionality/feature 6, the RRC configuration uses AI/ML model 6-1.

**Table 2: AI functionality, feature, or model configuration of the second RRC configuration**

| | |
|---|---|
| AI functionality/feature configuration: | Functionality/Feature 1: Supported |
| | Functionality/Feature 2: Supported |
| | Functionality/Feature 3: Supported |
| | Functionality/Feature 4: Supported |
| | Functionality/Feature 5: Supported |
| | Functionality/Feature 6: Supported |
| Model used for AI functionality/feature 1: | Model 1-1 |
| Model used for AI functionality/feature 2: | Model 2-2 |
| Model used for AI functionality/feature 3: | Model 3-2 |
| Model used for AI functionality/feature 4: | Model 4-3 |
| Model used for AI functionality/feature 5: | Model 5-2 |
| Model used for AI functionality/feature 6: | Model 6-1 |

A selection may be performed between the first RRC configuration and the second RRC configuration based on the first DCI format. For example, a terminal receives DCI with the first DCI format, with a second indicator included therein. If a value of the second indicator is 01, AI functionalities, features, or models configured in the first RRC configuration are activated; if the value of the second indicator is 10, AI functionalities, features, or models configured in the second RRC configuration are activated; and if the value of the second indicator is 00, the AI functionalities, features, or models configured in the second RRC configuration are deactivated.

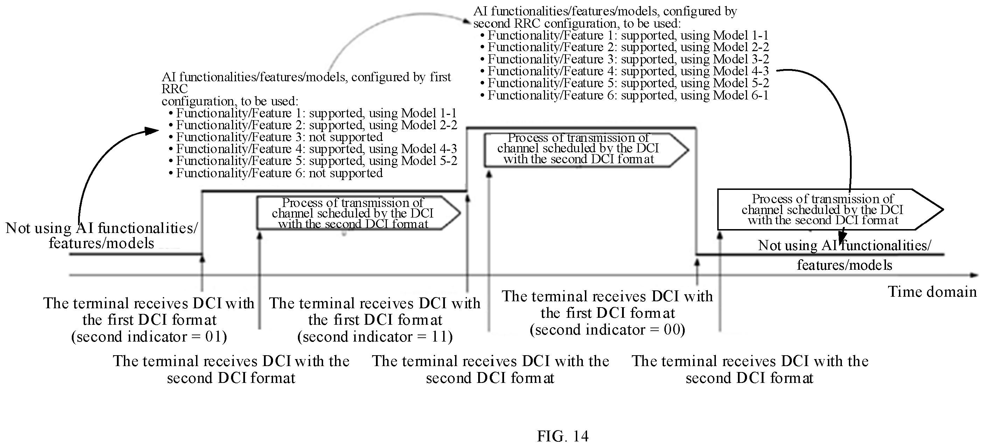

As shown in FIG. 14, a selection may be performed among RRC configurations of various AI functionalities, features, or models based on dedicated AI switch-type DCI. For example, as a terminal receives DCI with the first DCI format and a value of a second indicator included in the DCI is 01, the terminal activates AI functionalities, features, or models configured in a first RRC configuration, where the AI functionalities, features, or models to be used may be referenced in Table 1. In a case where these AI functionalities, features, or models are in an active state, as receiving DCI with a second DCI format, the terminal may perform a process of the transmission of a channel scheduled by the DCI with the second DCI format, and use these AI functionalities, features, or models for time-frequency resources scheduled by this DCI. As the terminal receives the DCI with the first DCI format and the value of the second indicator included in the DCI is 10, the terminal switches to AI functionalities, features, or models configured in a second RRC configuration, where the AI functionalities, features, or models to be used may be referenced in Table 2. In a case where these AI functionalities, features, or models are in an active state, as receiving DCI with the second DCI format, the terminal may perform the process of the transmission of the channel scheduled by the DCI with the second DCI format, and use these AI functionalities, features, or models for time-frequency resources scheduled by this DCI. As the terminal receives DCI with the first DCI format and the value of the second indicator included is 00, the AI functionalities, features, or models are deactivated, that is, without using the AI functionalities, features, or models. In a case where these AI functionalities, features, or models are in a deactivated state, as receiving DCI with the second DCI format, the terminal may perform the process of the transmission of the channel scheduled by the DCI with the second DCI format, and will no longer use the AI functionalities, features, or models for time-frequency resources scheduled by this DCI.

The first DCI format in this example may not contain resource allocation information, and is used only to activate/deactivate or select AI functionalities, features, or models of an RRC configuration, thus achieving very low DCI signaling overhead. Since after the AI functionalities, features, or models of the RRC configuration are activated, these AI functionalities, features, or models may remain active until deactivated, avoiding the frequent transmission of dedicated AI switch-type DCI, thereby further saving DCI overhead and PDCCH capacity.

The communication method in the embodiments of the present application may use a dedicated DCI format for AI/ML-based air interface operations. This dedicated DCI format may be specifically used to activate, deactivate, and select AI/ML functionalities, features, or models, thereby avoiding including, within a single DCI format, both scheduling information of AI/ML functionalities, features, or models and resource scheduling information using non-AI/ML algorithms, thereby improving DCI signaling efficiency and preventing an increase in DCI signaling overhead. Moreover, a terminal may detect DCI with the dedicated AI/ML DCI format to batch-activate various AI/ML functionalities, features, or models of the RRC configuration. Compared to using a large number of indicators in DCI to activate each AI/ML functionality, feature, or model individually, this method may further reduce DCI overhead.

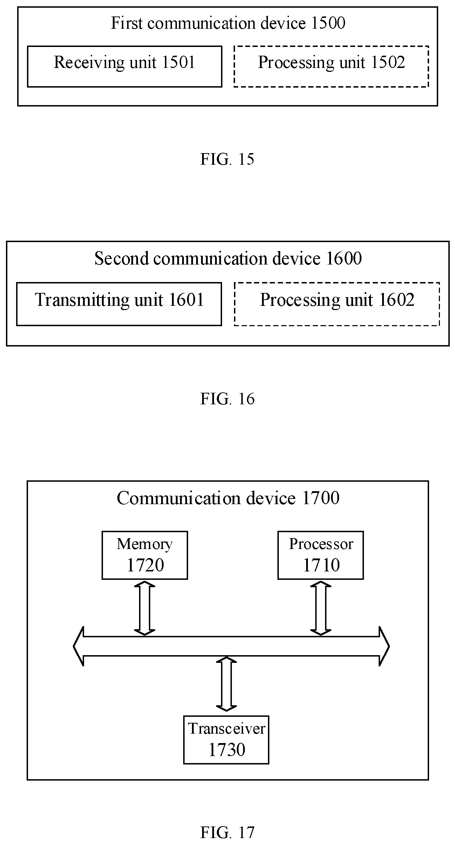

FIG. 15 is a schematic block diagram of a first communication device 1500, in accordance with an embodiment of the present application. The first communication device 1500 may include: a receiving unit 1501, configured to receive first downlink control information (DCI), where a format of the first DCI is used to determine whether to activate an artificial intelligence configuration.

In one implementation, the artificial intelligence configuration includes at least one of the following: configuration information of one or more artificial intelligence (AI) or machine learning (ML) functionalities; configuration information of one or more AI or ML features; or configuration information of one or more AI or ML models.

In one implementation, the artificial intelligence configuration is carried in a radio resource control (RRC) configuration.

In one implementation, the format of the first DCI is a first format, and the first format is used to activate a first RRC configuration.

In one implementation, the first DCI includes a first indicator, where the first indicator having a first value indicates to activate a first RRC configuration, and/or the first indicator having a second value indicates to deactivate the first RRC configuration.

In one implementation, the first DCI includes first resource scheduling information, and the first communication device further includes:
a processing unit 1502, configured to use a first RRC configuration within resources scheduled by the first resource scheduling information.

In one implementation, the processing unit 1502 is further configured to: determine to transmit or receive a first channel based on an artificial intelligence configuration in the first RRC configuration within the resources scheduled by the first resource scheduling information; and stop using the artificial intelligence configuration in the first RRC configuration, in response to completion of transmission or reception of the first channel.

In one implementation, the first DCI includes a first indicator, where the first indicator having a first value indicates to activate a first RRC configuration within the resources scheduled by the first resource scheduling information, and/or the first indicator having a second value indicates to deactivate the first RRC configuration within the resources scheduled by the first resource scheduling information.

In one implementation, the first DCI includes a second indicator, where the second indicator having a third value indicates to activate the first RRC configuration, and/or the second indicator having a fourth value indicates to activate a second RRC configuration.

In one implementation, the second indicator having a fifth value indicates to deactivate the RRC configuration.

In one implementation, the first DCI includes a second indicator, where the second indicator having a third value indicates to activate a first RRC configuration within the resources scheduled by the first resource scheduling information in the first DCI, and/or the second indicator having a fourth value indicates to activate a second RRC configuration within the resources scheduled by the first resource scheduling information in the first DCI.

In one implementation, the second indicator having a fifth value indicates to deactivate the RRC configuration within the resources scheduled by the first resource scheduling information.

In one implementation, the receiving unit is further configured to receive second DCI, where a format of the second DCI is used for the first communication device to determine not to activate the artificial intelligence configuration.

In one implementation, the format of the second DCI is a second format, and the second format is used to determine not to use the first RRC configuration.

In one implementation, the second DCI includes second resource scheduling information, and the second resource scheduling information is used to indicate the first communication device not to use the first RRC configuration within resources scheduled by the second resource scheduling information.

In one implementation, the second resource scheduling information is used to indicate the first communication device to transmit or receive a second channel without using an artificial intelligence configuration in the first RRC configuration within the resources scheduled by the second resource scheduling information.

The first communication device 1500 of the embodiments of the present application is capable of implementing the corresponding functions of the first communication device in the foregoing method embodiments. The process, function, implementation method, and beneficial effect corresponding to each module (sub-module, unit, or component) in the first communication device 1500 may be referenced in the corresponding descriptions of the foregoing method embodiments and are not repeated here. It will be noted that the function described for each module (sub-module, unit, or component) in the first communication device 1500 of the embodiments of the present application may be implemented by different modules (sub-modules, units, or components) or by a single module (sub-module, unit, or component).

FIG. 16 is a schematic block diagram of a second communication device 1600, in accordance with an embodiment of the present application. The second communication device 1600 may include: a transmitting unit 1601, configured to transmit first downlink control information (DCI), where a format of the first DCI is used to determine whether to activate an artificial intelligence configuration.

In one implementation, the artificial intelligence configuration includes at least one of the following: configuration information of one or more artificial intelligence (AI) or machine learning (ML) functionalities; configuration information of one or more AI or ML features; or configuration information of one or more AI or ML models.

In one implementation, the artificial intelligence configuration is carried in a radio resource control (RRC) configuration.

In one implementation, the format of the first DCI is a first format, and the first format is used to activate a first RRC configuration.

In one implementation, the first DCI includes a first indicator, where the first indicator having a first value indicates to activate a first RRC configuration, and/or the first indicator having a second value indicates to deactivate the first RRC configuration.

In one implementation, the first DCI includes first resource scheduling information, and the first resource scheduling information is used to indicate a first communication device to activate a first RRC configuration within resources scheduled by the first resource scheduling information.

In one implementation, the second communication device further includes: a processing unit 1602, configured to transmit or receive a first channel based on an artificial intelligence configuration in the first RRC configuration within the resources scheduled by the first resource scheduling information. The processing unit is further configured to stop using the artificial intelligence configuration in the first RRC configuration, in response to completion of transmission or reception of the first channel.

In one implementation, the first DCI includes a first indicator, where the first indicator having a first value indicates to activate the first RRC configuration within the resources scheduled by the first resource scheduling information, and/or the first indicator having a second value indicates to deactivate the first RRC configuration within the resources scheduled by the first resource scheduling information.

In one implementation, the first DCI includes a second indicator, where the second indicator having a third value indicates to activate the first RRC configuration, and/or the second indicator having a fourth value indicates to activate a second RRC configuration.

In one implementation, the second indicator having a fifth value indicates to deactivate the RRC configuration.

In one implementation, the first DCI includes a second indicator, where the second indicator having a third value indicates to activate the first RRC configuration within the resources scheduled by the first resource scheduling information in the first DCI, and/or the second indicator having a fourth value indicates to activate a second RRC configuration within the resources scheduled by the first resource scheduling information.

In one implementation, the second indicator having a fifth value indicates to deactivate the RRC configuration within the resources scheduled by the first resource scheduling information.

In one implementation, the transmitting unit is further configured to transmit second DCI, where a format of the second DCI is used for a first communication device to determine not to activate the artificial intelligence configuration.

In one implementation, the format of the second DCI is a second format, and the second format is used to determine not to use the first RRC configuration.

In one implementation, the second DCI includes second resource scheduling information, and the second resource scheduling information is used to indicate a first communication device not to use the first RRC configuration within resources scheduled by the second resource scheduling information.

In one implementation, the processing unit is further configured to transmit or receive a second channel without using the artificial intelligence configuration in the first RRC configuration within the resources scheduled by the second resource scheduling information in the second DCI.

The second communication device 1600 of the embodiments of the present application is capable of implementing the corresponding functions of the second communication device in the foregoing method embodiments. The process, function, implementation method, and beneficial effect corresponding to each module (sub-module, unit, or component) in the second communication device 1600 may be referenced in the corresponding descriptions of the foregoing method embodiments and are not repeated here. It will be noted that the function described for each module (sub-module, unit, or component) in the second communication device 1600 of the embodiments of the present application may be implemented by different modules (sub-modules, units, or components) or by a single module (sub-module, unit, or component).

FIG. 17 is a schematic structural diagram of a communication device 1700, in accordance with embodiments of the present application. The communication device 1700 includes a processor 1710, which can call and run a computer program from a memory to enable the communication device 1700 to implement the methods in the embodiments of the present application.

In one implementation, the communication device 1700 may further include a memory 1720. Here, the processor 1710 may call a computer program from the memory 1720 and run the computer program, to enable the communication device 1700 to implement the methods in the embodiments of the present application.

Here, the memory 1720 may be a separate device independent of the processor 1710, or may be integrated into the processor 1710.

In one implementation, the communication device 1700 may further include a transceiver 1730, and the processor 1710 may control the transceiver 1730 to communicate with other devices. Specifically, the processor 1710 may control the transceiver 1730 to transmit information or data to other devices, or to receive information or data transmitted by other devices. Here, the transceiver 1730 may include a transmitter and a receiver. Furthermore, the transceiver 1730 may include an antenna, and there may be one or more antennas.

In one implementation, the communication device 1700 may be the first communication device of the embodiments of the present application, and the communication device 1700 may implement the corresponding processes performed by the first communication device in various methods of the embodiments of the present application. For the sake of brevity, details are not repeated herein.

In one implementation, the communication device 1700 may be the second communication device of the embodiments of the present application, and the communication device 1700 may implement the corresponding processes performed by the second communication device in various methods of the embodiments of the present application. For the sake of brevity, details are not repeated herein.

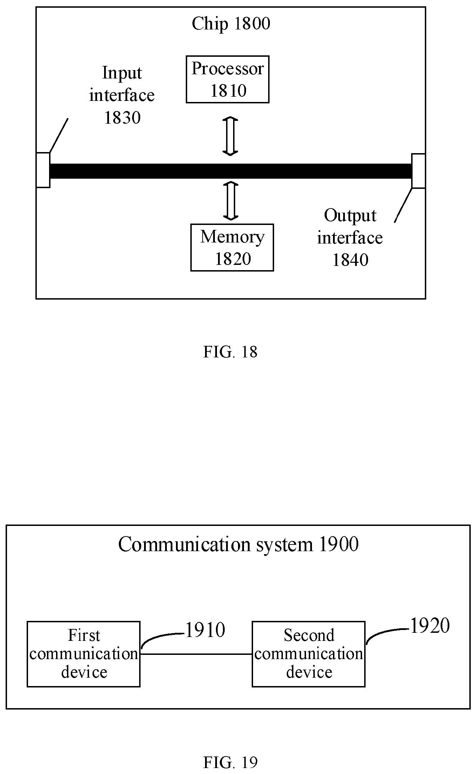

FIG. 18 is a schematic structural diagram of a chip 1800, in accordance with embodiments of the present application. The chip 1800 includes a processor 1810, and the processor 1810 may call a computer program from a memory and run the computer program, to implement the methods in the embodiments of the present application.

In one implementation, the chip 1800 may further include a memory 1820. Here, the processor 1810 may call a computer program from the memory 1820 and run the computer program, to implement the methods performed by the first communication device or the second communication device in the embodiments of the present application. Here, the memory 1820 may be a separate device independent of the processor 1810, or may be integrated into the processor 1810.

In one implementation, the chip 1800 may further include an input interface 1830. Here, the processor 1810 may control the input interface 1830 to communicate with other devices or chips. Specifically, the processor 1810 may control the input interface 1830 to acquire information or data transmitted by other devices or chips.

In one implementation, the chip 1800 may further include an output interface 1840. Here, the processor 1810 may control the output interface 1840 to communicate with other devices or chips. Specifically, the processor 1810 may control the output interface 1840 to output information or data to other devices or chips.

In one implementation, the chip may be applied to the first communication device in the embodiments of the present application, and the chip may implement the corresponding processes performed by the first communication device in various methods of the embodiments of the present application. For the sake of brevity, details are not repeated herein.

In one implementation, the chip may be applied to the second communication device in the embodiments of the present application, and the chip may implement the corresponding processes performed by the second communication device in various methods of the embodiments of the present application. For the sake of brevity, details are not repeated herein.

Chips applied to the first communication device and the second communication device may be the same chip or different chips.

It should be understood that the chip mentioned in the embodiments of the present application may also be referred to as a system-level chip, a system chip, a chip system, or a system-on-a-chip.

The above-mentioned processor may be a general-purpose processor, a digital signal processor (DSP), a field-programmable gate array (FPGA), an application-specific integrated circuit (ASIC), or another programmable logic device, transistor logic device, or discrete hardware component. Here, the above-mentioned general-purpose processor may be a microprocessor or any conventional processor.

The above-mentioned memory may be a volatile memory or a non-volatile memory, or may include both volatile and non-volatile memories. Here, the non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random-access memory (RAM).

It should be understood that the above-mentioned memory is exemplary but not restrictive. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch-link DRAM (SLDRAM), or a direct rambus RAM (DR RAM). That is, the memory in the embodiments of the present application is intended to include, but is not limited to, these and any other suitable types of memory.

FIG. 19 is a schematic block diagram of a communication system 1900, in accordance with embodiments of the present application. The communication system 1900 includes a first communication device 1910 and a second communication device 1920. The first communication device 1910 is configured to receive first DCI, where a format of the first DCI is used to determine whether to activate an artificial intelligence configuration. The second communication device 1920 is configured to transmit the first DCI.

Here, the first communication device 1910 may be configured to implement the corresponding functions performed by the first communication device in the above methods, and the second communication device 1920 may be configured to implement the corresponding functions performed by the second communication device in the above methods. For the sake of brevity, details are not repeated herein.

The above-mentioned embodiments may be implemented in whole or in part by software, hardware, firmware, or any combination thereof. When implemented using software, these embodiments may be implemented, in whole or in part, in the form of a computer program product. The computer program product includes one or more computer instructions. When the computer program instruction(s) are loaded and executed on a computer, all or part of the processes or functions in accordance with the embodiments of the present application are generated. The computer may be a general-purpose computer, a special-purpose computer, a computer network, or another programmable apparatus. The computer instruction(s) may be stored in a computer-readable storage medium or transmitted from one computer-readable storage medium to another computer-readable storage medium. For example, the computer instruction(s) may be transmitted from one website, computer, server, or data center to another website, computer, server, or data center via a wired (e.g., coaxial cable, optical fiber, digital subscriber line (DSL)) or wireless (e.g., infrared, radio, microwave) means. The computer-readable storage medium may be any available medium that is capable of being accessed by a computer or a data storage device (such as a server or data center) that integrates one or more available media. The available medium may be a magnetic medium (e.g., floppy disk, hard disk, or magnetic tape), an optical medium (e.g., DVD), or a semiconductor medium (e.g., solid state disk (SSD)).

It should be understood that in various embodiments of the present application, the magnitude of the sequence numbers of the foregoing processes does not imply the order of execution. The execution order of each process should be determined by its function and internal logic, and should not constitute any limitation on the implementation process of the embodiments of the present application.

A person skilled in the art may clearly understand that for the convenience and brevity of description, the specific working processes of the systems, devices, and units described above may be referred to the corresponding processes in the foregoing method embodiments, and will not be repeated herein.

The foregoing descriptions are merely specific implementations of the present application, but the protection scope of the present application is not limited thereto. Any variation or replacement readily conceivable by a person skilled in the art within the technical scope disclosed in the present application shall fall within the protection scope of the present application. Therefore, the protection scope of the present application shall be subject to the protection scope of the claims.

## Claims

1. A communication method, comprising:
receiving, by a first communication device, first downlink control information (DCI), wherein a format of the first DCI is used to determine whether to activate an artificial intelligence configuration.

2. The method according to claim 1, wherein the artificial intelligence configuration comprises at least one of following:
configuration information of one or more artificial intelligence (AI) or machine learning (ML) functionalities;
configuration information of one or more AI or ML features; or
configuration information of one or more AI or ML models.

3. The method according to claim 1 or 2, wherein the artificial intelligence configuration is carried in a radio resource control (RRC) configuration.

4. The method according to claim 3, wherein the format of the first DCI is a first format, and the first format is used to activate a first RRC configuration.

5. The method according to claim 4, wherein the first DCI comprises a first indicator, wherein the first indicator having a first value indicates to activate the first RRC configuration, and/or the first indicator having a second value indicates to deactivate the first RRC configuration.

6. The method according to claim 4, wherein the first DCI comprises first resource scheduling information, and the method further comprises:
using, by the first communication device, the first RRC configuration within resources scheduled by the first resource scheduling information.

7. The method according to claim 6, wherein using, by the first communication device, the first RRC configuration within the resources scheduled by the first resource scheduling information, comprises:
transmitting or receiving, by the first communication device, a first channel based on an artificial intelligence configuration in the first RRC configuration within the resources scheduled by the first resource scheduling information; and
stopping using, by the first communication device, the artificial intelligence configuration in the first RRC configuration, in response to completion of transmission or reception of the first channel.

8. The method according to claim 6 or 7, wherein the first DCI comprises a first indicator, wherein the first indicator having a first value indicates to activate the first RRC configuration within the resources scheduled by the first resource scheduling information, and/or the first indicator having a second value indicates to deactivate the first RRC configuration within the resources scheduled by the first resource scheduling information.

9. The method according to any one of claims 4 to 8, wherein the first DCI comprises a second indicator, wherein the second indicator having a third value indicates to activate the first RRC configuration, and/or the second indicator having a fourth value indicates to activate a second RRC configuration.

10. The method according to claim 9, wherein the second indicator having a fifth value indicates to deactivate the RRC configuration.

11. The method according to any one of claims 4 to 8, wherein the first DCI comprises a second indicator, wherein the second indicator having a third value indicates to activate the first RRC configuration within resources scheduled by first resource scheduling information in the first DCI, and/or the second indicator having a fourth value indicates to activate a second RRC configuration within the resources scheduled by the first resource scheduling information in the first DCI.

12. The method according to claim 11, wherein the second indicator having a fifth value indicates to deactivate the RRC configuration within the resources scheduled by the first resource scheduling information.

13. The method according to any one of claims 1 to 12, wherein the method further comprises:
receiving, by the first communication device, second DCI, wherein a format of the second DCI is used for the first communication device to determine not to activate the artificial intelligence configuration.

14. The method according to claim 13, wherein the format of the second DCI is a second format, and the second format is used to determine not to use a first RRC configuration.

15. The method according to claim 13 or 14, wherein the second DCI comprises second resource scheduling information, and the second resource scheduling information is used to indicate the first communication device not to use a first RRC configuration within resources scheduled by the second resource scheduling information.

16. The method according to claim 15, wherein the second resource scheduling information is used to indicate the first communication device to transmit or receive a second channel without using an artificial intelligence configuration in the first RRC configuration within the resources scheduled by the second resource scheduling information.

17. A communication method, comprising:
transmitting, by a second communication device, first downlink control information (DCI), wherein a format of the first DCI is used to determine whether to activate an artificial intelligence configuration.

18. The method according to claim 17, wherein the artificial intelligence configuration comprises at least one of following:
configuration information of one or more artificial intelligence (AI) or machine learning (ML) functionalities;
configuration information of one or more AI or ML features; or
configuration information of one or more AI or ML models.

19. The method according to claim 17 or 18, wherein the artificial intelligence configuration is carried in a radio resource control (RRC) configuration.

20. The method according to claim 19, wherein the format of the first DCI is a first format, and the first format is used to activate a first RRC configuration.

21. The method according to claim 20, wherein the first DCI comprises a first indicator, wherein the first indicator having a first value indicates to activate the first RRC configuration, and/or the first indicator having a second value indicates to deactivate the first RRC configuration.

22. The method according to claim 20, wherein the first DCI comprises first resource scheduling information, and the first resource scheduling information is used to indicate a first communication device to activate the first RRC configuration within resources scheduled by the first resource scheduling information.

23. The method according to claim 22, wherein the method further comprises:
transmitting or receiving, by the second communication device, a first channel based on an artificial intelligence configuration in the first RRC configuration within the resources scheduled by the first resource scheduling information; and
stopping using, by the second communication device, the artificial intelligence configuration in the first RRC configuration, in response to completion of transmission or reception of the first channel.

24. The method according to claim 22 or 23, wherein the first DCI comprises a first indicator, wherein the first indicator having a first value indicates to activate the first RRC configuration within the resources scheduled by the first resource scheduling information, and/or the first indicator having a second value indicates to deactivate the first RRC configuration within the resources scheduled by the first resource scheduling information.

25. The method according to any one of claims 20 to 24, wherein the first DCI comprises a second indicator, wherein the second indicator having a third value indicates to activate the first RRC configuration, and/or the second indicator having a fourth value indicates to activate a second RRC configuration.

26. The method according to claim 25, wherein the second indicator having a fifth value indicates to deactivate the RRC configuration.

27. The method according to any one of claims 20 to 26, wherein the first DCI comprises a second indicator, wherein the second indicator having a third value indicates to activate the first RRC configuration within resources scheduled by first resource scheduling information in the first DCI, and/or the second indicator having a fourth value indicates to activate a second RRC configuration within the resources scheduled by the first resource scheduling information.

28. The method according to claim 27, wherein the second indicator having a fifth value indicates to deactivate the RRC configuration within the resources scheduled by the first resource scheduling information.

29. The method according to any one of claims 17 to 28, wherein the method further comprises:
transmitting, by the second communication device, second DCI, wherein a format of the second DCI is used for a first communication device to determine not to activate the artificial intelligence configuration.

30. The method according to claim 29, wherein the format of the second DCI is a second format, and the second format is used to determine not to use a first RRC configuration.

31. The method according to claim 29 or 30, wherein the second DCI comprises second resource scheduling information, and the second resource scheduling information is used to indicate a first communication device not to use a first RRC configuration within resources scheduled by the second resource scheduling information.

32. The method according to claim 31, wherein the method further comprises:
transmitting or receiving, by the second communication device, a second channel, without using an artificial intelligence configuration in the first RRC configuration within the resources scheduled by the second resource scheduling information in the second DCI.

33. A first communication device, comprising:
a receiving unit, configured to receive first downlink control information (DCI), wherein a format of the first DCI is used to determine whether to activate an artificial intelligence configuration.

34. The first communication device according to claim 33, wherein the artificial intelligence configuration comprises at least one of following:
configuration information of one or more artificial intelligence (AI) or machine learning (ML) functionalities;
configuration information of one or more AI or ML features; or
configuration information of one or more AI or ML models.

35. The first communication device according to claim 33 or 34, wherein the artificial intelligence configuration is carried in a radio resource control (RRC) configuration.

36. The first communication device according to claim 35, wherein the format of the first DCI is a first format, and the first format is used to activate a first RRC configuration.

37. The first communication device according to claim 36, wherein the first DCI comprises a first indicator, wherein the first indicator having a first value indicates to activate the first RRC configuration, and/or the first indicator having a second value indicates to deactivate the first RRC configuration.

38. The first communication device according to claim 36, wherein the first DCI comprises first resource scheduling information, and the device further comprises:
a processing unit, configured to use the first RRC configuration within resources scheduled by the first resource scheduling information.

39. The first communication device according to claim 38, wherein the processing unit is configured to:
transmit or receive a first channel based on an artificial intelligence configuration in the first RRC configuration within the resources scheduled by the first resource scheduling information; and
stop using the artificial intelligence configuration in the first RRC configuration, in response to completion of transmission or reception of the first channel.

40. The first communication device according to claim 38 or 39, wherein the first DCI comprises a first indicator, wherein the first indicator having a first value indicates to activate the first RRC configuration within the resources scheduled by the first resource scheduling information, and/or the first indicator having a second value indicates to deactivate the first RRC configuration within the resources scheduled by the first resource scheduling information.

41. The first communication device according to any one of claims 36 to 40, wherein the first DCI comprises a second indicator, wherein the second indicator having a third value indicates to activate the first RRC configuration, and/or the second indicator having a fourth value indicates to activate a second RRC configuration.

42. The first communication device according to claim 41, wherein the second indicator having a fifth value indicates to deactivate the RRC configuration.

43. The first communication device according to any one of claims 36 to 40, wherein the first DCI comprises a second indicator, wherein the second indicator having a third value indicates to activate the first RRC configuration within resources scheduled by first resource scheduling information in the first DCI, and/or the second indicator having a fourth value indicates to activate a second RRC configuration within the resources scheduled by the first resource scheduling information in the first DCI.

44. The first communication device according to claim 43, wherein the second indicator having a fifth value indicates to deactivate the RRC configuration within the resources scheduled by the first resource scheduling information.

45. The first communication device according to any one of claims 33 to 44, wherein the receiving unit is further configured to receive second DCI, wherein a format of the second DCI is used for the first communication device to determine not to activate the artificial intelligence configuration.

46. The first communication device according to claim 45, wherein the format of the second DCI is a second format, and the second format is used to determine not to use a first RRC configuration.

47. The first communication device according to claim 45 or 46, wherein the second DCI comprises second resource scheduling information, and the second resource scheduling information is used to indicate the first communication device not to use a first RRC configuration within resources scheduled by the second resource scheduling information.

48. The first communication device according to claim 47, wherein the second resource scheduling information is used to indicate to transmit or receive a second channel without using an artificial intelligence configuration in the first RRC configuration within the resources scheduled by the second resource scheduling information.

49. A second communication device, comprising:
a transmitting unit, configured to transmit first downlink control information (DCI), wherein a format of the first DCI is used to determine whether to activate an artificial intelligence configuration.

50. The second communication device according to claim 49, wherein the artificial intelligence configuration comprises at least one of following:
configuration information of one or more artificial intelligence (AI) or machine learning (ML) functionalities;
configuration information of one or more AI or ML features; or
configuration information of one or more AI or ML models.

51. The second communication device according to claim 49 or 50, wherein the artificial intelligence configuration is carried in a radio resource control (RRC) configuration.

52. The second communication device according to claim 51, wherein the format of the first DCI is a first format, and the first format is used to activate a first RRC configuration.

53. The second communication device according to claim 52, wherein the first DCI comprises a first indicator, wherein the first indicator having a first value indicates to activate the first RRC configuration, and/or the first indicator having a second value indicates to deactivate the first RRC configuration.

54. The second communication device according to claim 52, wherein the first DCI comprises first resource scheduling information, and the first resource scheduling information is used to indicate a first communication device to activate the first RRC configuration within resources scheduled by the first resource scheduling information.

55. The second communication device according to claim 54, wherein the method further comprises:
a processing unit, configured to transmit or receive a first channel based on an artificial intelligence configuration in the first RRC configuration within the resources scheduled by the first resource scheduling information;
wherein the processing unit is further configured to stop using the artificial intelligence configuration in the first RRC configuration, in response to completion of transmission or reception of the first channel.

56. The second communication device according to claim 54 or 55, wherein the first DCI comprises a first indicator, wherein the first indicator having a first value indicates to activate the first RRC configuration within the resources scheduled by the first resource scheduling information, and/or the first indicator having a second value indicates to deactivate the first RRC configuration within the resources scheduled by the first resource scheduling information.

57. The second communication device according to any one of claims 52 to 56, wherein the first DCI comprises a second indicator, wherein the second indicator having a third value indicates to activate the first RRC configuration, and/or the second indicator having a fourth value indicates to activate a second RRC configuration.

58. The second communication device according to claim 57, wherein the second indicator having a fifth value indicates to deactivate the RRC configuration.

59. The second communication device according to any one of claims 52 to 58, wherein the first DCI comprises a second indicator, wherein the second indicator having a third value indicates to activate the first RRC configuration within resources scheduled by first resource scheduling information in the first DCI, and/or the second indicator having a fourth value indicates to activate a second RRC configuration within the resources scheduled by the first resource scheduling information.

60. The second communication device according to claim 59, wherein the second indicator having a fifth value indicates to deactivate the RRC configuration within the resources scheduled by the first resource scheduling information.

61. The second communication device according to any one of claims 49 to 60, wherein the transmitting unit is further configured to transmit second DCI, wherein a format of the second DCI is used for a first communication device to determine not to activate the artificial intelligence configuration.

62. The second communication device according to claim 61, wherein the format of the second DCI is a second format, and the second format is used to determine not to use a first RRC configuration.

63. The second communication device according to claim 61 or 62, wherein the second DCI comprises second resource scheduling information, and the second resource scheduling information is used to indicate a first communication device not to use a first RRC configuration within resources scheduled by the second resource scheduling information.

64. The second communication device according to claim 63, wherein the processing unit is further configured to transmit or receive a second channel without using an artificial intelligence configuration in the first RRC configuration within the resources scheduled by the second resource scheduling information in the second DCI.

65. A communication device, comprising: a transceiver, a processor, and a memory, wherein the memory is configured to store a computer program, the transceiver is configured to communicate with other devices, and the processor is configured to call the computer program stored in the memory and run the computer program stored, to enable the communication device to perform the method according to any one of claims 1 to 32.

66. A chip, comprising: a processor, wherein the processor is configured to call a computer program from a memory and run the computer program, enabling a device equipped with the chip to perform the method according to any one of claims 1 to 32.

67. A computer-readable storage medium, for storing a computer program that, when run by a device, enables the device to perform the method according to any one of claims 1 to 32.

68. A computer program product, comprising a computer program instruction that enables a computer to perform the method according to any one of claims 1 to 32.

69. A computer program, wherein the computer program enables a computer to perform the method according to any one of claims 1 to 32.
